# EUROPEAN PATENT APPLICATION

(11) **EP 1 459 972 A2**
(43) Date of publication of application: **22.09.2004**
(21) Application number: 04075399.8
(22) Date of filing: 10.02.2004
(51) Int. Cl.: B62K 27/00, B62B 7/00

(54) **Trailer provided with a mounting part for a wheel set**

(30) Priority: 17.02.2003 NL 1022703
(71) Applicant: Kid Car Company B.V., 8430 AA Oosterwolde (NL)
(72) Inventor: de Vogel, Kees, 8430 AA Oosterwolde (NL)

(57) **Abstract**

The invention relates to a wheel set (1) for a trailer, in which a connection between the components of the wheel set (1) is provided by a mounting part (2,3) made of a synthetic material. The mounting part (2,3) provides for a connection between different tubular profiles(4,5), the mounting of the wheels (6,7), the suspension of the spring assembly (19,20,21) and the guidance of the parking brake (25,26,27,28,29) .

## Description

The invention relates to a mounting part, for mounting a wheel to a wheel set built of profiles. More in particular the invention relates to pairs of wheels for trailers in which small children may be transported. For this application conflicting requirements exist. On the one hand, the quality of the trailer must be excellent, because the consequences of a failure may be very serious. On the other hand, the competition in this market sector is ruinous, which means that every possible cost reduction must be seized with both hands.

The mounting part according to the invention makes it possible for the young father to assemble the wheel set himself, without technical skills being demanded and without risks being involved. This means that the wheel set, but also a trailer provided with such a wheel set, may be offered in the form of a do-it-yourself kit, which means that one may save on costs for mounting, packing and transportation. The inventive mounting part enabling this is according to an aspect of the invention characterised in that the mounting part comprises two part halves which form at least substantially each others mirror images, that both mounting part halves are provided with a first hole, which holes are in line when the mounting part halves are coupled and through which a shaft of a wheel may be placed and that both coupled mounting halves may accommodate a first profile end and a second profile end that is positioned at least substantially perpendicular to the first profile end.

Starting point when assembling a do-it-yourself kit is a minimal package, without options. Options may be offered then as a supplement package, under the condition that they may be installed easily. A favourable embodiment of the mounting part is according to another aspect of the invention characterised in that both mounting part halves are provided with a second hole, which holes are in line when the mounting part halves are coupled and in which a parking assembly may be mounted, arranged for blocking a wheel. In this way, a parking assembly for a trailer may simply be added to a wheel set.

A favourable embodiment according to a further aspect of the invention is characterised in that both mounting block halves are provided with a third hole which holes are in line when the mounting block halves are coupled and in which a spring assembly may be mounted. This spring assembly may as well be bought as a supplement package and added to a minimal trailer package.

A further favourable embodiment is characterised in that the spring assembly comprises an at least substantially U-shaped bracket, of which the legs are coupled by spring elements to a pin, accommodated in the third holes and that the U-shaped bracket is provided with at least two in-line holes, in which a shaft of a wheel may be placed and two in-line holes in which a canting shaft, accommodated in the first holes, may be placed.

A further favourable embodiment is characterised in that the U-shaped bracket is provided with a row of pairs of in-line holes, in which a shaft of a wheel may be placed. In this way, the resilience may easily be chosen, dependent upon for example the load of the wheel set.

A further favourable embodiment is characterised in that the spring assembly comprises an at least substantially elliptically shaped disc made of rubber or a synthetic material, provided with holes near the focal points to which the pin and a leg of the U-shaped bracket may be mounted and with at least one hole, positioned near the centre of the disc, for selecting a resilience and a damping.

The invention also relates to a synthetic die-cast part. The inventive die-cast part is characterised in that the synthetic die-cast part is one half of the mounting part as described in the above. The advantage of a mounting part realised in this way is that the costs are low and that a strong and yet very light construction may be realised with it.

The invention also relates to a wheel set, comprising profiles, coupled with the aid of at least two mounting parts as described in the above.

A favourable embodiment of the inventive wheel set is characterised in that the profiles comprise tubular aluminium profiles having a square cross section.

The invention also relates to a trailer, provided with a wheel set consisting of profiles, coupled with the aid of at least two mounting parts as described in the above.

The invention will now be further explained with a reference to the following figures, in which:
- Fig. 1: schematically represents a possible embodiment of a wheel set provided with mounting parts according to the invention;
- Fig. 2: represents in perspective a possible embodiment of a mounting part;
- Fig. 3: represents in perspective a mounting part provided with wheel bearings;
- Fig. 4: represents in perspective a mounting part provided with a resilient wheel suspension;
- Fig. 5: represents in perspective a mounting part provided with a parking brake.

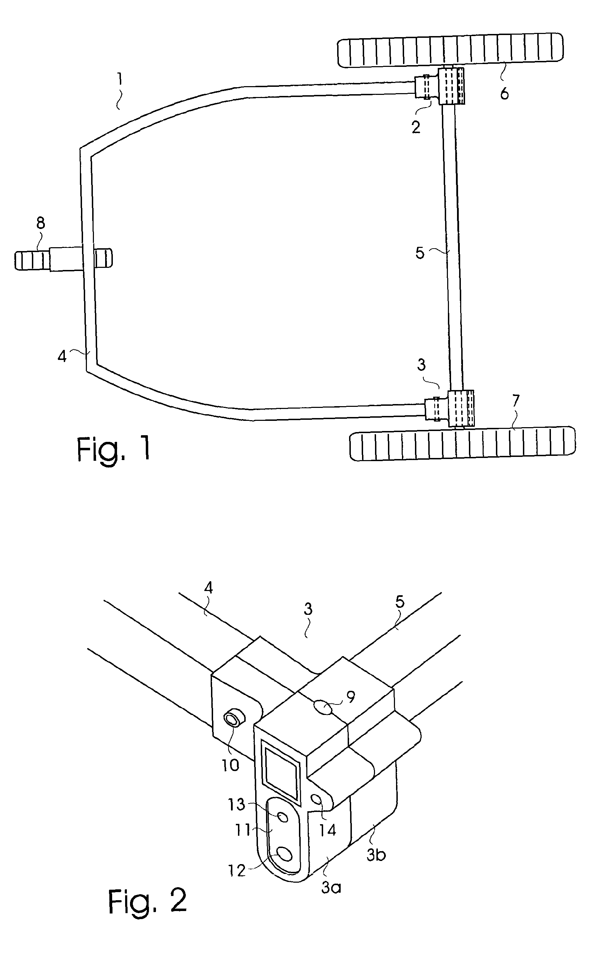

Fig. 1 schematically represents a possible embodiment of a wheel set 1 provided with mounting parts 2,3 according to the invention, in which mounting parts 2,3 form the connection between a semicircular bent tubular profile 4 and a crosspiece 5. Moreover, mounting parts 2,3 forms a bearing for wheels 6,7 of the wheel set. On wheel set 1, usually some kind of bucket seat is mounted for one or two children. Wheel set 1 is in the embodiment shown here provided with a front wheel 8 and may be used as a buggy for transporting one or two children. Wheel 8 may if desired be replaced by a bar, with which wheel set 1 may be coupled to a bicycle in a way well known in the art. Of course it is also possible to realise other types of wheel sets with these mounting parts.

Fig. 2 represents in perspective a possible embodiment of a mounting part 3, consisting of two synthetic die-cast parts 3a,3b which form each others mirror images and which enclose each half of an end of tubular profile 4 and through which crosspiece 5 may be put. Both die-cast parts 3a,3b are provided with a recess 9 via which each crosspiece 5 can be fixed, for example with a blind rivet. Moreover both die-cast parts are provided with an opening 10, via which a bolt may pass with which tubular profile 4 can be fixed and which mutually connects both die-cast parts. Openings 10 are preferably provided with a raised edge, which can be used for centring a spring assembly, not shown here. Both die-cast parts are provided with a recess 11, in which a small metal plate may be fixed, not shown here. The metal plates, mounted on both sides in this way, form a support for a shaft of a wheel. Moreover, both die-cast parts are provided with a hole 12 for letting pass the shaft, and a hole 13 for fixing the metal plate. Finally, a hole 14 is provided, inside of which a pin-shaped parking assembly may move, not shown here, with which a wheel may be blocked.

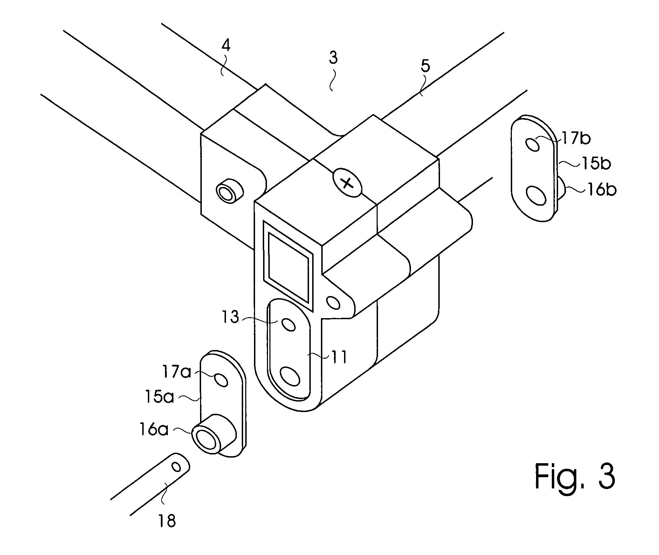

Fig. 3 represents in perspective a mounting part 3 provided with wheel bearings 15a,15b, consisting of small metal plates onto which safety rings 16a,16b are connected. Via holes 17a,17b the wheel bearings may be fixed into the recesses 11, for example with bolts in the holes 13. Subsequently, a shaft 18 may be put through the assembly and fixed with the aid of a lock pin, not shown here.

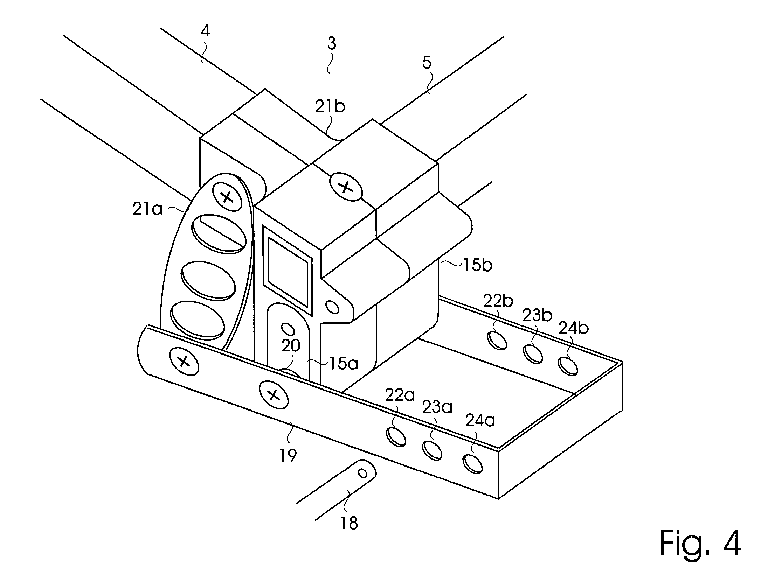

Fig. 4 represents in perspective a mounting part 3 provided with a resilient wheel suspension, consisting of a U-shaped bracket 19 which may rotate round a canting shaft 20 and which may rotate itself round two wheel bearings 15a,15b. The legs of bracket 19 are connected to the holes 10 of mounting part 3 with the aid of rubber suspension means 21a,21b, whereby the raised edges, not shown in this figure, will centre the suspension means and distribute the forces exerted on it. Suspension means of this type are known as such. It is also known that they are not only resilient but, with the proper selection of the material and the shape, may have a damping effect as well. In bracket 19 pairs of holes 22a,22b,23a, 23b,24a,24b have been made. A shaft 18 of a wheel may be inserted in one of the pairs of holes in bracket 19 and fixed with the aid of a lock pin, not shown here. A desired amount of resilience may be chosen by selecting one of the pairs of holes.

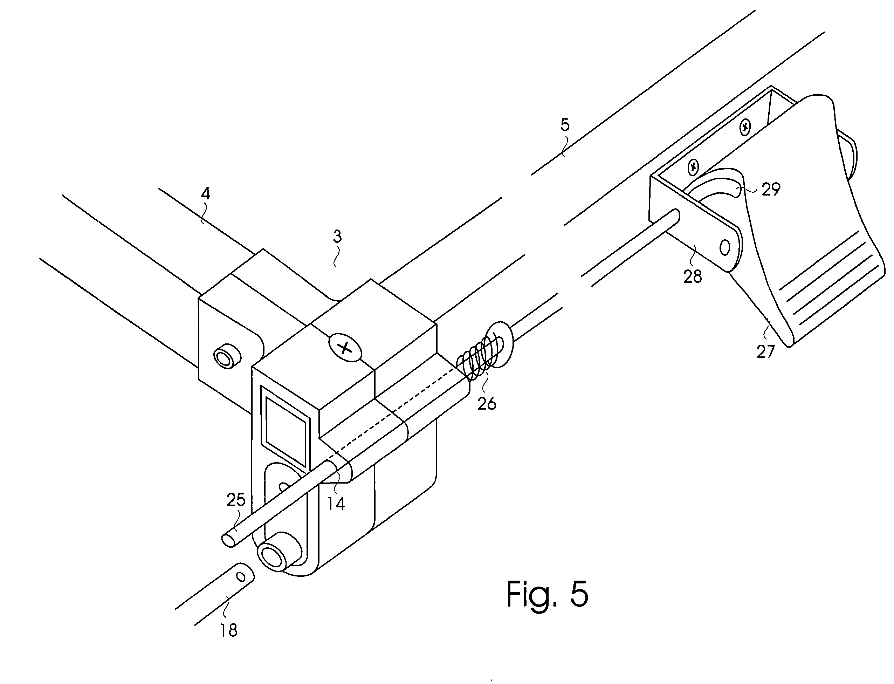

Fig. 5 represents in perspective a mounting part 3 provided with a parking brake, consisting of a pin-shaped blocking device 25 of which a first end projects via hole 14 in mounting part 3 in the direction of a wheel, mounted onto shaft 18. Operationally, the pin-shaped end of the parking brake is pulled towards the centre with the aid of a spring 26, as a result of which the wheel may spin freely. The second end of the pin-shaped blocking device 25 ends in a foot pedal 27 which is mounted for rotation in a bracket 28, mounted onto crosspiece 5. In foot pedal 27 a slot 29 is made, which is passed through by the second end of the pin-shaped blocking device 25 when foot pedal 27 is pushed in and which is shaped such that pin-shaped blocking device 25 is pushed outwards.

## Claims

1. Mounting part, for mounting a wheel to a wheel set built of profiles, **characterised in that** the mounting part comprises two part halves which form at least substantially each others mirror images, that both mounting part halves are provided with a first hole, which holes are in line when the mounting part halves are coupled and through which a shaft of a wheel may be placed and that both coupled mounting halves may accommodate a first profile end and a second profile end that is positioned at least substantially perpendicular to the first profile end.

2. Mounting part according to claim 1, **characterised in that** both mounting part halves are provided with a second hole, which holes are in line when the mounting part halves are coupled and in which a parking assembly may be mounted, arranged for blocking a wheel.

3. Mounting part according to claim 1 or 2, **characterised in that** both mounting block halves are provided with a third hole which holes are in line when the mounting block halves are coupled and in which a spring assembly may be mounted.

4. Mounting part according to claim 3, **characterised in that** the spring assembly comprises an at least substantially U-shaped bracket, of which the legs are coupled by spring elements to a pin, accommodated in the third holes and that the U-shaped bracket is provided with at least two in-line holes, in which a shaft of a wheel may be placed and two in-line holes in which a canting shaft, accommodated in the first holes, may be placed.

5. Mounting part according to claim 4, **characterised in that** the U-shaped bracket is provided with a row of pairs of in-line holes, in which a shaft of a wheel may be placed.

6. Mounting part according to claim 4 or 5, **characterised in that** the spring assembly comprises an at least substantially elliptically shaped disc made of rubber or a synthetic material, provided with holes near the focal points to which the pin and a leg of the U-shaped bracket may be mounted and with at least one hole, positioned near the centre of the disc, for selecting a resilience and a damping.

7. Synthetic die-cast part, **characterised in that** the synthetic die-cast part is one half of the mounting part according to one of the previous claims.

8. Wheel set, comprising profiles, coupled with the aid of at least two mounting parts according to one of the claims 1 to 6.

9. Wheel set according to claim 8, **characterised in that** the profiles comprise tubular aluminium profiles having a square cross section.

10. Trailer, provided with a wheel set consisting of profiles, coupled with the aid of at least two mounting parts according to one of the claims 1 to 6.
